Europäisches Patentamt

European Patent Office

Office européen des brevets

(19)

(11) **EP 0 556 361 B1**

(12) **FASCICULE DE BREVET EUROPEEN**

(45) Date de publication et mention
de la délivrance du brevet:
**23.04.1997 Bulletin 1997/17**

(51) Int Cl.⁶: **H04B 7/204**

(86) Numéro de dépôt international:
**PCT/EP92/02001**

(21) Numéro de dépôt: **92918165.9**

(22) Date de dépôt: **28.08.1992**

**WO 93/05589 (18.03.1993 Gazette 1993/08)**

(54) **PROCEDE ET DISPOSITIF POUR MULTIPLEXER DES SIGNAUX DE DONNEES**

Verfahren und Vorrichtung zum Multiplexen von Datensignalen

DATA SIGNAL MULTIPLEXING METHOD AND DEVICE

(84) Etats contractants désignés:
**DE GB IT**

(30) Priorité: **11.09.1991 FR 9111202**

(43) Date de publication de la demande:
**25.08.1993 Bulletin 1993/34**

(73) Titulaire: **AGENCE SPATIALE EUROPEENNE**
**F-75738 Paris Cedex 15 (FR)**

(72) Inventeurs:
• **DE GAUDENZI, Riccardo**
**NL-2312 BB Leiden (NL)**
• **VIOLA, Roberto**
**NL-2343 SX Oegstgeest (NL)**
• **ELIA, Carlo**
**NL-2343 CL Oegstgeest (NL)**

(74) Mandataire: **Vanderperre, Robert et al**
**Bureau Vander Haeghen S.A.**
**Rue Colonel Bourg 108 A**
**1030 Bruxelles (BE)**

(56) Documents cités:
**US-A- 4 837 786**

• **IEEE Journal on Selected Areas in
Communications, vol. 8, no. 4, mai 1990, (New
York, US), D.C. KEMDIRIM et al.: "DS SSMA with
some IC realizations", pages 663-674, voir page
665, colonne de gauche, lignes 17-26**

• **IEEE International Conference on
Communications, Philadelphia, PA, 13-17 juin
1982, vol. 3, IEEE, (New York, US), A. HAMMER
et al.: "Performance analysis of M-ary code shift
keying in code division multiple access
systems", pages 7E.2.1- 7E.2.5, voir page 7E.2.1,
colonne de gauche, lignes 27-37; figure 1**

• **IEEE Global Telecommunication Conference,
Dallas, Texas, 27 novembre 1989, vol. 2, IEEE,
(New York, US), R. DE GAIDENZI et al.: "High
efficiency voice activated CDMA mobile
communication system based on master code
synchronization", pages 733-737, voir page 733,
colonne de droite, lignes 12- 24; figure 4**

• **IEEE Journal on Selected Areas in
Communications, vol. 8, no. 5, juin 1990, (New
York, US), U. GROB et al.: "Microcellular
direct-sequence spread-spectrum radio system
using N-path RAKE receiver", pages 772-780,
voir abrégé; figure 8**

• **IEEE Journal on Selected Areas in
Communications, vol. 10, no. 2, février 1992,
(New York, US), R. DE GAUDENZI et al.:
"Bandlimited quasi-synchronous CDMA: a novel
satellite access technique for mobile and
personal communication systems", pages
328-343, voir page 329, colonne de droite, ligne
1 - page 331, colonne de gauche, ligne 23; figures
1,2,10**

## Description

La présente invention se rapporte aux systèmes de communications par satellite et en particulier à un système de communications à accès multiple par répartition à codes (CDMA) qui permet de transmettre des données dans une largeur de bande limitée.

Les satellites de communications sont déjà largement utilisés pour la transmission de données. Or, les possibilités offertes par la microélectronique ouvrent de nouvelles applications pour les satellites de communications, par exemple la transmission numérique du son et les communications par terminal mobile et par terminal individuel à très faible ouverture (VSAT). La radiodiffusion numérique du son en particulier s'avère très prometteuse et suscite un intérêt considérable dans l'industrie des télécommunications. Le succès de ces nouveaux services de communications par satellite est cependant lié aux performances qui peuvent être réalisées, à une bonne utilisation des équipements embarqués à bord d'un satellite et à une ingénierie adéquate pour les terminaux au sol. Un élément essentiel qui conditionne la complexité et le rendement du système de communications par satellite est le système d'accès au réseau.

Par FR-A-8910481 est connu un système de communications ? accès multiple par répartition à codes dans lequel la porteuse de transmission est activée par la voix de l'usager et dans lequel la synchronisation est effectuée au moyen d'un code pilote. La clé de ce système réside dans le mode de synchronisation des terminaux d'usagers qui est différente dans la liaison aller et dans la liaison retour. Dans la liaison aller, la synchronisation est obtenue par la transmission d'un code pilote sans interruption. Dans la liaison retour vers le satellite, la synchronisation est assurée par un processus d'alignement basé sur une activation forcée de la porteuse de transmission par la voix de l'usager et la sélection d'un code d'usager déduit par décodage d'un élément contenu dans le code pilote. Le procédé d'accès multiple mis en oeuvre dans ce système connu impose une période de code égale à la durée de symbole si l'on veut réduire efficacement le bruit interne. C'est ce que montre une étude "Performance Evaluation Of Synchronous Code Division Multiple Access (S.CDMA) For Satellite Mobile Systems" par R. De Gaudenzi, C. Elia, R. Viola, publiée dans "Proceedings of the IEEE Global Telecommunications Conference GLOBECOM'90", San Diego, Californie, 2-5 décembre 1990.

Ce procédé connu permet d'améliorer l'efficacité d'un système de communications à accès multiple par répartition à codes en réduisant le temps d'acquisition des signaux à spectre étalé dans les circuits de réception. Cependant, deux problèmes majeurs furent relevés par la suite.

Il avait d'abord été constaté que les performances de la technique d'accès multiple à répartition par codes pourraient être améliorées en combinant la technique de synchronisation par code pilote, tel que proposé dans le procédé connu précité, avec l'utilisation de codes Gold synchronisés. Toutefois, il s'est avéré que l'utilisation d'un code synchronisé empêchait l'usage d'un système de correction d'erreurs efficace car la mise en oeuvre d'un système de correction d'erreur équivalait à une perte de capacité de traitement due à la réduction de la période de code et par conséquent du nombre de codes disponibles.

En outre, des études (J.L. Massey, T. Mittelholzer : Technical Assistance For The CDMA Communication System Analysis, Final Report, Institute for Signal and Information Processing CH-8092 ETH, Zurich, Septembre 1990) ont révélé que l'utilisation des codes Gold préférentiellement en phase, c'est-à-dire des codes Gold ayant une corrélation mutuelle minimale, est un choix optimal dans le cas d'un réseau de communications point-multipoints. Cependant, si l'emploi de codes Gold préférentiellement en phase représente une façon simple d'améliorer la puissance sans réduire le gain de traitement et sans réduire la largeur de bande dans un système d'accès multiple par répartition à codes asynchrone classique (A-CDMA), il n'en est malheureusement plus de même lorsqu'il s'agit d'un système d'accès multiple quasi-orthogonal synchronisé.

En fait, le codage dans ce cas réduit le nombre de codes d'étalement quasi-orthogonaux disponibles car le débit de symboles augmente pour une largeur de bande donnée, et c'est par conséquent le nombre de canaux de communications qui se trouve ainsi réduit.

Ces limitations rendent difficile l'utilisation du système d'accès multiple par répartition à codes avec synchronisation par code pour les applications commerciales d'un système de communications par satellite, par exemple pour la transmission numérique du son ou les communications au moyen de micro-terminaux terrestres.

La présente invention a pour but d'éviter les limitations imposées à l'emploi de codes synchronisés dans un système d'accès multiple par répartition à codes, et à cet effet, elle propose un système d'accès multiple par répartition à codes radicalement nouveau.

Cet objectif est atteint grâce à l'invention par un procédé et un dispositif pour multiplexer des signaux en vue de leur transmission avec un débit donné par un système de communications par satellite avec accès multiple par répartition à codes dans une bande de fréquences de largeur minimum, moyennant des équipements au sol et embarqués à bord du satellite ayant un encombrement réduit et une puissance faible.

Conformément à l'invention, les signaux de données entrants sont d'abord codés individuellement de manière que chacun d'eux soit représenté par un symbole distinct appartenant à une constellation de N symboles associés à N points distincts, générant ainsi un train de bits en phase avec le signal entrant et un train de bits en quadrature de phase avec le signal entrant. A chacun des trains de bits précités est attribuée une signature au moyen d'un code d'étalement distinct constitué d'une suite binaire de longueur prédéterminée dérivée de préférence d'un code Gold préférentiellement en phase, les codes d'étalement distincts des deux trains de bits précités étant des codes quasi-orthogonaux. La largeur de bande des signaux résultants est alors limitée par filtration puis les deux signaux en bande de base sont introduits dans un modulateur classique dans lequel ils modulent une porteuse de manière bien connue en soi. A l'extrémité réception d'une liaison, le signal peut être reçu dans un récepteur numérique de faible complexité qui utilise une réplique locale des codes d'étalement précités pour produire des échantillons désétalés pouvant être décodés. La fréquence de la porteuse et la phase du code sont maintenues en synchronisme grâce à une technique de synchronisation appropriée quelconque sauf dans le cas d'une liaison point-multipoints comme c'est le cas pour la radiodiffusion du son car dans ce cas la synchronisation est assurée automatiquement.

Le système selon l'invention présente les avantages suivants :

1. Il permet d'utiliser de façon optimale la puissance et la largeur de bande des transmetteurs/récepteurs pour des satellites à faisceau unique ou à faisceaux multiples.
2. Il assure une qualité de transmission élevée avec des stations mobiles ou portables, quelles que soient les conditions de propagation, même dans des conditions hostiles, par suite du faible niveau d'interférences.
3. Il s'adapte à des régimes de trafic très fortement variables, c'est-à-dire que les performances sont les mêmes pour des conditions de fort trafic et de faible trafic et pratiquement sans dégradation dans des conditions non nominales.
4. Il convient pour diverses applications diffusion numérique de la voix ou du son, transmission de données, transmission mixte.
5. Il s'adapte à des configurations de réseaux diverses : réseau en étoile, à plusieurs étoiles ou partiellement maillé.
6. Il satisfait aux exigences de densité de flux d'énergie (PFD) pour des terminaux d'utilisateurs assurant une interférence RF minimale avec d'autres services.

Le système d'accès multiple conforme à l'invention trouve une application particulière avantageuse dans le cadre du système de radiodiffusion numérique. Parmi d'autres applications on peut citer notamment les réseaux de communications par satellite avec micro-terminaux (terminaux à très faible ouverture) et les systèmes radiophoniques cellulaires.

L'invention est exposée plus en détails dans ce qui suit à l'aide des dessins joints.

La figure 1 est un schéma par blocs d'un circuit de multiplexage exemplaire selon l'invention.

La figure 2 est un schéma par blocs d'un récepteur numérique exemplaire.

La figure 3 illustre schématiquement une application typique exemplaire du système d'accès multiple selon l'invention.

La figure 4 est un diagramme illustrant les performances d'un système selon l'invention.

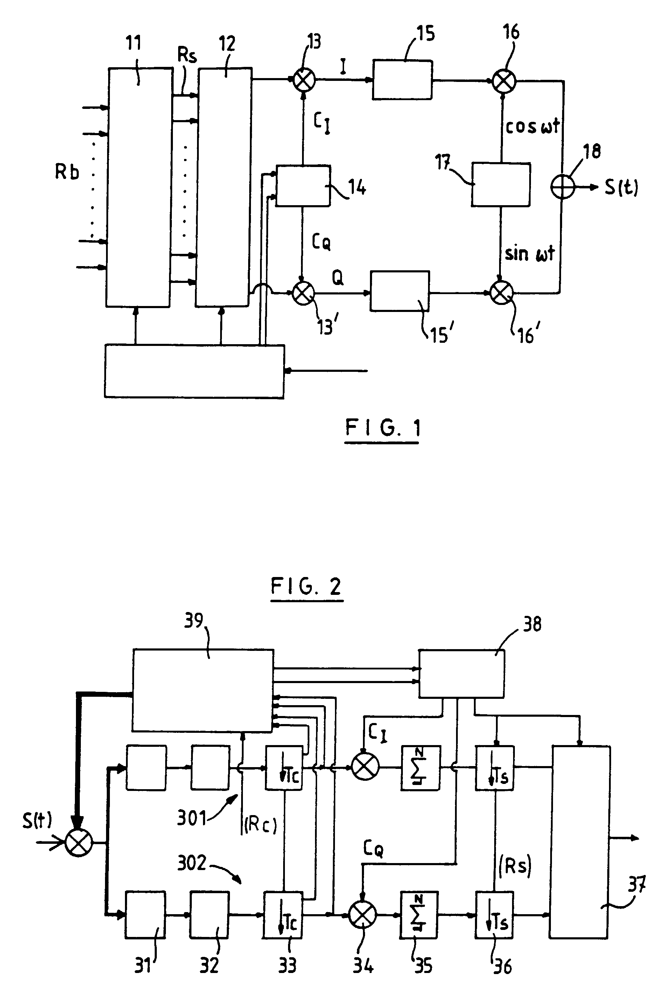

Le principe à la base du procédé selon l'invention consiste à associer chaque bit d'information du signal de données entrant à un point distinct d'une constellation de signaux de N points. Pratiquement, ce principe se trouve mis en oeuvre au moyen d'un circuit comprenant essentiellement un codeur linéaire suivi d'un modulateur par déplacement d'impulsion d'ordre N (N-PSK). La figure 1 montre un schéma fonctionnel par blocs d'un circuit exemplaire. Le codeur 11 reçoit le train de $p/m \log_2 N$ bits de signal d'entrée DS et génère $\log_2 N$ symboles pour chacun des $p/m \log_2 N$ bits d'entrée. La sortie du codeur 11 est appliquée à un modulateur N-PSK 12 d'après un programme de codage prédéterminé avec un débit de symboles Rs'. A la sortie du modulateur 12 sont produits deux trains de bits complexes I et Q en bande de base, cheminant avec un débit de symboles

$$R_S = \frac{R_{s'}}{\log_2 N} = \frac{m}{p} \cdot \frac{Rb}{\log_2 N}$$

où Rb est le débit des bits.

La manière dont les symboles codés sont associés aux points de la constellation PSK est choisie de manière à optimiser le rendement du système. L'objectif est de maximiser la distance euclidienne entre les signaux transmis. On peut par exemple adopter un codage trellis. Il est particulièrement intéressant de noter qu'en adaptant le procédé de codage/modulation proposé conformément à l'invention pour aménager l'accès multiple, il est possible de tenir compte d'un large éventail de conditions d'applications particulières afin d'accroître la largeur de bande et/ou le rendement spectral, et cela pratiquement sans ou avec un minimum de modification aux modems.

Une constellation avec codage Trellis 8 PSK avec 8 états, par exemple, procure un accroissement de rendement d'environ 3 dB avec un taux d'erreur binaire BER de $10^{-5}$, c'est-à-dire sans perte de capacité. Un autre avantage de ce codage est une meilleure insensibilité aux distorsions non linéaires des amplificateurs et aux effets d'interférence. De plus, les erreurs à la sortie du décodeur se produisent par giclée. Ce type d'erreur peut aisément être corrigé dans le décodeur. Des constellations plus complexes, telles que 16 PSK codé avec r=2/3 par par exemple, peuvent procurer un gain de puissance par rapport à une constellation 8 PSK non codé avec la même capacité.

Les signaux résultant à la sortie du modulateur 12 sont les composantes en phase I et en quadrature de phase Q. Dans deux multiplicateurs 13 et 13' dans les trains de bits I et Q sont signés individuellement au moyen de deux codes d'étalement quasi-orthogonaux séparés $C_I$ et $C_Q$ produits par un générateur de codes 14 de manière à produire deux trains de bits étalés constituant deux blocs. Ces codes d'étalement sont des suites binaires de longueur L. Afin de minimiser la corrélation croisée mutuelle entre les différents usagers, on choisit de préférence une période de code L/Rc égale à la période de symbole 1/Rs. Le rythme et la fréquence dans le modulateur sont contrôlés par une référence de synchronisation (connue en soi) du système de communications. Ce signal de synchronisation commun à tous les signaux transmis dans la largeur de bande représente une référence précise qui, si elle n'est pas modulée, n'est pas effectée par les pertes de modulation de données.

La longueur des codes d'étalement $C_I$ et $C_Q$ est un paramètre important qui conditionne les performances du système en ce qui concerne le bruit interne et le décalage dans le temps d'un bloc étalé. Afin de maintenir le bruit interne faible, il est important de limiter le décalage dans le temps à +/- 0,1 Tc (Tc représente la durée d'un bloc étalé). Une étude effectuée sous contrat pour le demandeur a démontré que le code d'étalement optimal doit être choisi dans des familles de codes Gold ayant une corrélation croisée mutuelle minimum.

En prévoyant différents polynomes pour générer des familles de codes il est possible de générer plusieurs familles de codes Gold ayant une corrélation croisée quasi-orthogonale avec les codes de la même famille et une corrélation pseudo-aléatoire avec les codes d'une famille différente. Cette manière de faire est particulièrement avantageuse dans le cas d'un satellite de communications à plusieurs faisceaux car il est alors possible d'assigner un code appartenant à une famille différente à chaque faisceau de manière à réduire le bruit induit par un faisceau adjacent.

Malheureusement, le nombre de familles qui peuvent ainsi être générées dépend de la longueur du code. Avec un code de faible longueur il est cependant possible d'augmenter le nombre de codes en réutilisant une version inverse de chaque signature. On peut montrer que le nouveau code présente les mêmes caractéristiques que le code Gold et les mêmes propriétés de corrélation croisée pseudo-aléatoires que la famille d'origine.

La faculté de générer des séries de codes est utile dans un signal radiodiffusé par exemple. En fait, il est possible d'attribuer un sous-ensemble quasi-orthogonal donné à la branche I et un sous-ensemble quasi-orthogonal différent à la branche Q. L'isolement entre les branches I et Q est ainsi assuré égal à la corrélation croisée de codes aléatoires.

Les trains de bits I et Q étalés résultant à la sortie des multiplicateurs 13 et 13' sont des signaux multi-niveaux. Ceux-ci sont mis en forme dans deux filtres de mise en forme 15, 15' puis, ils sont appliqués séparément à des modulateurs 16, 16' (connus en soi) où ils modulent respectivement les composantes en phase et en quadrature de phase d'une porteuse produite par un générateur local 17. Les deux signaux modulés sont alors additionnés dans un additionneur 18 avant d'être convertis dans la bande de fréquences intermédiaires de manière connue en soi.

A l'extrémité réception d'une liaison, la réception des signaux est assurée au moyen d'un récepteur numérique de faible complexité. Divers modes de réalisation sont possibles. La figure 2 montre un schéma par blocs exemplaire. Le circuit du récepteur comprend une partie travaillant à la cadence du débit des blocs Rc et une partie travaillant à la cadence du débit des symboles Rs.

Le récepteur comprend essentiellement deux chaînes de démodulation distinctes, l'une 301 traitant le signal pilote et l'autre 302 traitant le signal de données utile, ces deux chaînes ayant une entrée commune. Après transposition cohérente dans la bande de base à l'aide d'un démodulateur 31, chaque signal est filtré dans un filtre adapté 32, puis numérisé dans un échantillonneur 33 à la cadence d'un échantillon par bloc. Le désétalement du signal se fait ensuite par multiplication des échantillons avec les répliques locales des codes d'étalement $C_I$ et $C_Q$ dans les multiplicateurs 34, fournissant ainsi des suites d'échantillons complexes. Ce générateur de codes local 38 est contrôlé en phase par une unité logique de poursuite et d'acquisition 39 comme décrit dans "Chips Timing Synchronization in All-Digital Band-limited DS/SS Modem" par R. de Gaudezi, M. Luise, R. Viola, Proceedings of IEEE, International Comm. Conference ICC '91, Denver, Colorado, USA, June 23-26, 1991.

Après accumulation sur une période de symbole dans les sommateurs 35, les échantillons désétalés sont échantillonnés dans un échantillonneur 36 à la cadence d'un échantillon par symbole. Les échantillons I et Q obtenus sont alors décodés dans un décodeur Trellis N-PSK 37 fonctionnant à la cadence des symboles.

Afin de ne pas dégrader les performances lorsque des codes Gold élargis sont utilisés, il importe d'assurer une synchronisation des terminaux avec une erreur inférieure à +/- 0,3 blocs.

Dans le cas d'une transmission point-multipoints (comme c'est le cas pour la radiodiffusion du son), la synchronisation est assurée par la transmission d'une référence vers tous les terminaux. Dans la liaison aller, le démodulateur usager 38 pourrait par exemple utiliser l'horloge centrale comme référence de temps pour le canal utile. La perte de corrélation par suite d'une synchronisation imparfaite entre l'horloge centrale et le signal usager doit être maintenue à un minimum. Dans la liaison retour, chaque code d'étalement est poursuivi individuellement dans le récepteur. La fréquence doit également être contrôlée de façon très serrée dans une plage prédéterminée (+/- $6.10^{-2}$Rb par exemple).

Dans le cas d'une transmission multipoints-multipoints par exemple dans un réseau de micro-terminaux (M-VSAT), il y a lieu d'adopter une technique de synchronisation plus élaborée. En général, la technique de synchronisation s'est avérée non critique dans la pratique. En fait, la cadence des blocs (RC) est normalement maintenue faible (<3 M blocs/s). De plus, le fait que quelques terminaux soient hors synchronisation ne provoque pas de conséquences catastrophiques pour le réseau.

Diverses techniques de synchronisation peuvent être utilisées dans un système quasi-synchrone. La présence d'une référence disponible à tous les terminaux du réseau suggère d'utiliser une technique de synchronisation maître-esclave telle que décrite par exemple dans l'ouvrage "Telecommunication System Engineering", par W.C. Lindsley et M.K. Simon, Prentice Hall, Englewood Cliffs NJ., 1973.

La surveillance du niveau du signal pilote aux terminaux est un moyen utile pour assurer le réglage de puissance en boucle ouverte. Une fois que le code pilote est correctement synchronisé au démodulateur usager, le processus de synchronisation se poursuit par la correction de l'horloge transmetteur afin de compenser les variations du délai de propagation.

On peut distinguer deux types de synchronisation en boucle fermée. Dans une boucle fermée centralisée, la synchronisation au terminal éloigné est assistée par une station de contrôle. Dans une boucle fermée locale, le terminal assure de façon autonome l'alignement en recevant son propre écho renvoyé par le satellite. L'écho est comparé à la réplique locale et le signal d'erreur engendré est proportionnel au retard estimé. Pour réduire à un minimum le nombre de circuits de poursuite, la poursuite du retard peut être effectuée en boucle fermée. L'erreur de synchronisation est déterminée à la station centrale et transmise au terminal mobile au moyen du canal de communications. Pour de petites stations terriennes, la synchronisation n'est pas critique et peut être effectuée en mode local ou en mode centralisé.

Le procédé de multiplexage selon l'invention permet de réaliser des systèmes de communications par satellite parfaitement bien adaptés pour les applications commerciales futures grâce aux modems peu complexes et peu coûteux dont peuvent être équipées les stations terminales, et qui réalisent une démodulation cohérente des signaux reçus avec des pertes faibles (1-2 dB seulement). De plus, grâce à un rendement spectral et énergétique élevé, le procédé selon l'invention permet de mettre en place des réseaux comprenant de petites stations terminales capables de traiter des données avec un débit de quelques centaines de Kb/s par canal, par exemple des petits terminaux V-SAT et des stations mobiles.

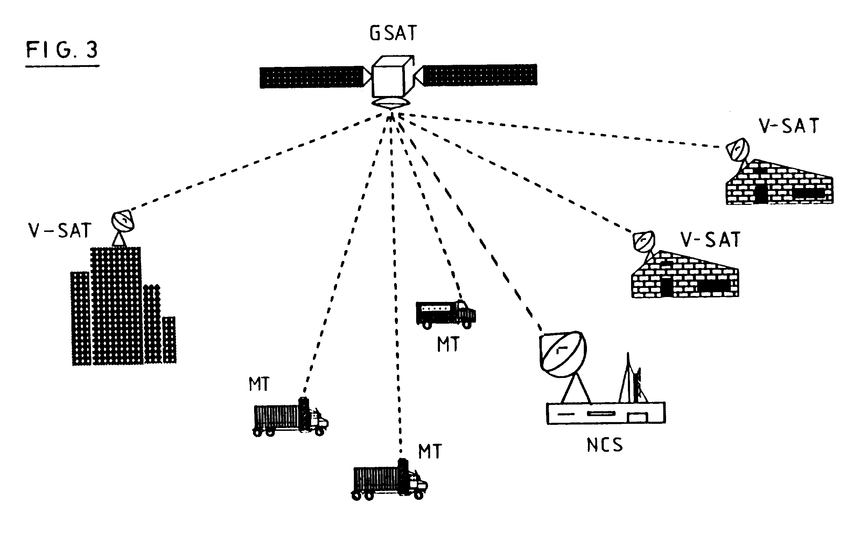

La figure 3 représente schématiquement un réseau typique exemplaire qui peut être implanté en mettant en oeuvre le procédé de multiplexage selon l'invention. Le réseau permet d'interconnecter un grand nombre de micro-terminaux MT avec plusieurs stations centrales V-SAT au moyen de canaux de communications relayés par un satellite géostationnaire GSAT. Le contrôle et la coordination du réseau se font par une station de coordination NCS. Certains des micro-terminaux MT peuvent être des stations mobiles. Les communications peuvent être établies, grâce à l'invention, avec des performances excellentes.

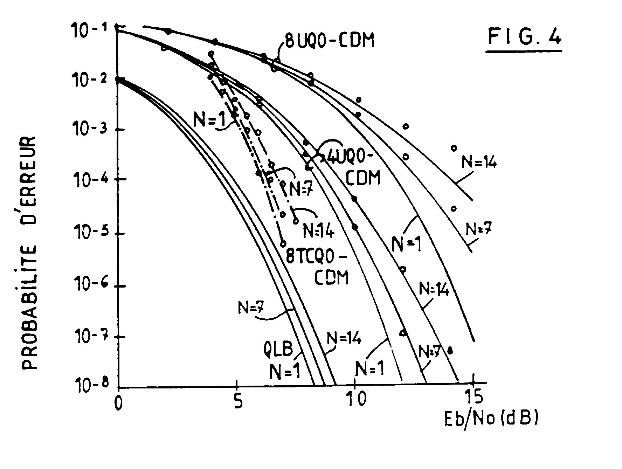

Une simulation a permis d'analyser les performances qui peuvent être attendues grâce à l'invention. Le diagramme de la figure 4 ci-annexée représente la variation de la probabilité d'erreur en fonction du rapport signal/ bruit pour un multiplexage CDM quasi-orthogonal 8PSK non codé (8UQO-CDM), un multiplexage CDM quasi-orthogonal 4PSK non codé (4 UQO-CDM) et un multiplexage CDM quasi-orthogonal avec codage Trellis à 8 états (8TCQO-CDM) dans le cas d'un gain de traitement de 15,5 avec N = 1, 7 et 14 (N est le nombre de transmetteurs). Ces courbes sont comparées aux limites quasi-inférieures (QLB) calculées pour N=1, 7 et 14. Il a été déterminé que les performances obtenues restent relativement constantes quelles que soient les longueurs du code d'étalement.

Ajoutons que la facilité de maintenir la synchronisation entre les terminaux transmetteur et récepteur permet de réaliser des modems peu complexes qui conviennent particulièrement pour de petits terminaux. De plus, la simplicité et la compacité des modems terminaux qui convient bien à une intégration à très grande échelle sont particulièrement avantageuses dans l'implantation d'un réseau de radiodiffusion du son numérique car, dans ce cas d'application typique d'un réseau point-multipoints, la synchronisation peut être assurée en utilisant une référence propre au système de transmission lui-même, en particulier le code pilote du système d'accès multiple CDMA comme évoqué dans ce qui précède.

Il est entendu que les modes de réalisation décrits dans ce qui précède sont des exemples donnés à titre illustratif et que l'invention n'est nullement limitée à ces exemples. Toute modification, toute variante et tout agencement équivalent doivent être considérés comme compris dans le cadre de l'invention.

## Revendications

1. Dans un système de communications par satellite avec accès multiple par répartition à codes, procédé pour multiplexer des signaux de données destinés à être transmis vers plusieurs stations terminales éloignées par modulation d'une porteuse par déplacement de phase, caractérisé en ce que, avant de moduler la porteuse de transmission, chaque signal de données binaire se trouve codé individuellement en un symbole distinct appartenant à une constellation PSK de N symboles associés à N points distincts de manière à produire deux trains de signaux binaires (I, Q), le premier train de signaux binaires (I) étant en phase avec le signal entrant et le second train de signaux binaires (Q) étant en quadrature de phase avec le signal entrant, et en ce que chacun des deux trains de signaux binaires (I, Q) précités est affecté d'une signature propre par combinaison avec un code d'étalement distinct $(C_I, C_Q)$, de manière à produire deux trains de signaux composites étalés destinés à être appliqués chacun à un modulateur, les deux codes d'étalement $(C_I, C_Q)$ précités étant en corrélation croisée quasi-orthogonale.

2. Procédé selon la revendication 1, caractérisé en ce que les codes d'étalement $(C_I, C_Q)$ sont des suites de signaux binaires dérivées d'un code Gold préférentiellement en phase.

3. Procédé selon la revendication 2, caractérisé en ce que les codes d'étalement $(C_I, C_Q)$ appartiennent à plusieurs familles de codes, les éléments de chaque famille présentant une corrélation croisée quasi-orthogonale avec les autres éléments de la même famille et une corrélation pseudo-aléatoire avec les codes appartenant à une famille différente.

4. Dispositif pour multiplexer des signaux de données, caractérisé en ce qu'il comprend un codeur linéaire (11) agencé pour recevoir les signaux de données provenant d'une source de données, et pour générer un train de signaux binaires codés, un modulateur à déplacement de phase à N phases (12) agencé pour recevoir le train de signaux binaires codés dudit codeur linéaire (11) et pour produire deux trains de signaux binaires (I, Q) distincts, le premier train de signaux binaires (I) étant en phase avec le train de signaux binaires entrant tandis que le second train de signaux binaires (Q) est en quadrature de phase avec le train de signaux binaires entrant, deux dispositifs (13, 13') connectés chacun à une sortie distincte du modulateur à déplacement de phase (12) pour combiner le train de signaux binaire (I, Q) avec un code d'étalement distinct $(C_I, C_Q)$ de manière à produire chacun un train de signaux binaires composite étalé destiné à moduler une porteuse de transmission, les deux codes d'étalement $(C_I, C_Q)$ étant en corrélation croisée quasi-orthogonale, et un générateur de codes d'étalement (14) agencé pour générer les deux codes d'étalement $(C_I, C_Q)$.

5. Dispositif selon la revendication 4, caractérisé en ce qu'un filtre de mise en forme (15, 15') est connecté à la sortie de chacun des dispositifs de combinaison (13, 13') précités.

## Patentansprüche

1. Verfahren zum Multiplexieren von Datensignalen in einem Satellitenkommunikationssystem mit Vielfachzugriff durch Codetrennung, wobei die Datensignale dazu vorgesehen sind, an mehrere entfernte Endstationen mittels Modulation einer Trägerwelle durch Phasenverschiebung übertragen zu werden, dadurch gekennzeichnet, daß vor der Modulation der Übertragungsträgerwelle jedes binäre Datensignal einzeln in ein unterschiedliches Symbol codiert wird, das einer PSK-Konstellation von N Symbolen zugehört, die N verschiedenen Punkten zugeordnet sind, so daß zwei Züge von binären Signalen (I, Q) erzeugt werden, wobei der erste Zug von binären Signalen (I) mit dem eintretenden Signal in Phase ist und der zweite Zug von binären Signalen (Q) zum eintretenden Signal um 90° phasenverschoben ist, und daß jedem der zwei obengenannten Züge von binären Signalen (I, Q) durch Kombination mit einem unterschiedlichen Verbreiterungscode $(C_I, C_Q)$ eine eigene Signatur zugeordnet wird, so daß zwei verbreiterte, zusammengesetzte Züge von Signalen erzeugt werden, die dazu bestimmt sind, jeweils an einen Modulator angelegt zu werden, wobei die zwei obengenannten Verbreiterungscodes $(C_I, C_Q)$ in einer quasiorthogonalen Kreuzkorrelationsbeziehung stehen.

2. Verfahren nach Anspruch 1, dadurch gekennzeichnet, daß die Verbreiterungscodes $(C_I, C_Q)$ vorzugsweise in Phase befindliche Folgen von binären Signalen sind, die aus einem Gold-Code abgeleitet werden.

3. Verfahren nach Anspruch 2, dadurch gekennzeichnet, daß die Verbreiterungscodes $(C_I, C_Q)$ mehreren Codefamilien zugehören, wobei die Elemente jeder Familie mit den anderen Elementen derselben Familie in einer quasiorthogonalen Kreuzkorrelationsbeziehung stehen und mit den Codes, die zu einer anderen Familie gehören, in einer pseudozufälligen Korrelationsbeziehung stehen.

4. Vorrichtung zum Multiplexieren von Datensignalen, dadurch gekennzeichnet, daß sie einen linearen Codierer (11), der so beschaffen ist, daß er die von einer Datenquelle ausgehenden Datensignale empfängt und einen Zug von codierten binären Signalen erzeugt, einen Phasenverschiebungsmodulator mit N Phasen (12), der so beschaffen ist, daß er den Zug von codierten binären Signalen des linearen Codierers (11) empfängt und zwei verschiedene Züge von binären Signalen (I, Q) erzeugt, wobei der erste Zug von binären Signalen (I) mit dem Zug von eintretenden binären Signalen in Phase ist, während der zweite Zug von binären Signalen (Q) zum Zug der eintretenden binären Signale um 90° phasenverschoben ist, zwei Vorrichtungen (13, 13') die jeweils an einen unterschiedlichen Eingang des Phasenverschiebungsmodulators (12) angeschlossen sind, um den Zug von binären Signalen (I, Q) mit einem unterschiedlichen Verbreiterungscode ($C_I$, $C_Q$) zu kombinieren, um so jeweils einen verbreiterten, zusammengesetzten Zug von binären Signalen zu erzeugen, der dazu vorgesehen ist, eine Übertragungsträgerwelle zu modulieren, wobei die Verbreiterungscodes ($C_I$, $C_Q$) in einer quasiorthogonalen Kreuzkorrelationsbeziehung stehen, sowie einen Generator für Verbreiterungscodes (14) enthält, der so beschaffen ist, daß der die zwei Verbreiterungscodes ($C_I$, $C_Q$) erzeugt.

**5.** Vorrichtung nach Anspruch 4, dadurch gekennzeichnet, daß an den Ausgang jeder der obengenannten Kombinationsvorrichtungen (13, 13') ein Signalformungsfilter (15, 15') angeschlossen ist.

**Claims**

1. In a Code Division Multiple Access satellite communication system, a method of multiplexing data signals to be transmitted to a plurality of terminal stations by phase-shift keying (PSK) carrier modulation, characterised in that, prior to modulating the transmission carrier, each binary data signal is individually encoded into an individual symbol pertaining to a PSK constellation of N symbols associated to N distinct points so as to produce two bit streams (I, Q), the first bit stream (I) being in phase with the incoming signal and the second bit stream (Q) being in phase-quadrature with the incoming signal, and in that each of said two bit streams is assigned an individual signature by combining it with an individual spreading code ($C_I$, $C_Q$) thereby to produce two spread composite bit streams intended each to being applied to a modulator, said two spreading codes ($C_I$, $C_Q$) being in quasi-orthogonal cross-correlation therebetween.

2. The method defined in claim 1, wherein the spreading codes ($C_I$, $C_Q$) are bit sequences derived from a preferentially-phased Gold code.

3. The method defined in claim 2, wherein the spreading codes ($C_I$, $C_Q$) pertain to several code families, the codes in each family showing quasi-orthogonal cross-correlation properties with the other codes of the same family and showing pseudorandom correlation properties with the codes pertaining to a different family.

4. A device for multiplexing data signals characterised by comprising a linear encoder (11) arranged to accept data signals from a data source and to generate a coded bit stream, an N-state phase shift keying modulator (12) arranged to receive the coded bit streams from said linear encoder (11) and produce two distinct bit streams (I, Q), the first bit stream (I) being in phase with the incoming bit stream and the second bit stream (Q) being in phase-quadrature with the incoming bit stream, a pair of devices (13, 13') being each connected to a separate PSK modulator output for combining the bit stream (I, Q) with an individual spreading code ($C_I$, $C_Q$) so as to produce each a spread composite bit stream to be used for modulating a transmission carrier, said two spreading codes ($C_I$, $C_Q$) being in quasi-orthogonal cross-correlation therebetween, and a spreading code generator (14) arranged to generate said two spreading codes ($C_I$, $C_Q$).

5. The device defined in claim 4, characterised by comprising a shaping filter (15, 15') connected to the output of each of said combination devices (13, 13').

F I G. 1

F I G. 2

FIG. 3

FIG.4